# EUROPEAN PATENT SPECIFICATION

(11) **EP 2 603 958 B1**
(45) Date of publication and mention of the grant of the patent: **24.07.2019**
(21) Application number: 11816178.5
(22) Date of filing: 09.08.2011
(51) Int. Cl.: H01S 3/097, H01S 3/08, H01S 3/038, H01S 3/104, H01S 3/223, H01S 3/04, H01S 3/041

(54) **LASER ARRANGEMENT AND SYSTEM, AND A MEDICAL LASER TREATMENT SYSTEM THEREOF**
LASERANORDNUNG UND -SYSTEM SOWIE EIN MEDIZINISCHES LASERBEHANDLUNGSSYSTEM DAMIT
AGENCEMENT ET SYSTÈME LASER, ET SYSTÈME ASSOCIÉ DE TRAITEMENT MÉDICAL PAR LASER

(30) Priority: 10.08.2010 US 372276 P
(43) Date of publication of application: 19.06.2013
(73) Proprietor: Dentaray Ltd., 42101 Netanya (IL)
(72) Inventor: CHOMSKY, Doron, 76227 Rehovot (IL); MEDINI, Dror, 60920 Kadima (IL)
(74) Representative: Graham Watt & Co LLP
(86) International application number: PCT/IL2011/000649
(87) International publication number: WO 2012/020408

(56) References cited:
- EP-A1- 0 776 073
- US-A- 3 743 963
- US-A- 5 596 593
- US-A1- 2007 019 701
- US-A1- 2007 205 727
- US-A1- 2008 285 607
- US-A1- 2010 189 156
- US-B1- 6 603 792

## Description

### BACKGROUND OF THE INVENTION

Gaseous lasers have found extensive applications in the laser processing industry, including laser cutting, welding of materials, laser hardening through phase transformation, and in medical applications. In particular, in recent years, there has been considerable investigation into various forms of carbon dioxide gas (CO₂) lasers, which radiate at wavelengths between 9 and 11µm, and may be operated in Continuous Wave (CW) or pulsed regimes. While other gas lasers have efficiency of 0.1% or less, the CO₂ laser may have efficiency of up to about 30%.

For excitation of the CO₂ lasers, it is known to utilize DC (direct current) pulsed electric discharge and/or RF (radio frequency) alternating electric discharge. It has been suggested in the prior art to utilize combined DC and RF discharges for the excitation of CO₂ cylindrical lasers. The prior art cylindrical lasers utilizing a combined DC and RF discharge operate with optically stable resonators that normally comprise, disposed at opposite ends of a laser cavity, a highly reflective output mirror which functions both to reflect internal radiation beams into the laser cavity and to transfer an output radiation beam exiting out of the laser cavity, and a feedback mirror. The two mirrors allow the internal beams to numerously oscillate inside the laser cavity in order to get high gain and improved directionality of the output beam.

A problem exists with the use of optically stable resonators in lasers where high output power is achieved by the increase of the laser tube inner diameter. Namely, it is known that an optically stable resonator operates in a multi-mode regime and produces a low quality laser beam, when its Fresnel number N_{F} =α² /(λL) exceeds the value of 2, where a is a radial dimension of an exposed output mirror surface, λ is the wavelength of radiation inside the resonator, and L is the resonator length.

It has been known in the prior art to provide a powerful laser equipped with an unstable optical resonator with a relatively large Fresnel number (N_{F} >3). The unstable resonator has primary and feedback mirrors, wherein the primary mirror is of a larger diameter than the feedback mirror so that the output radiation reflected from the periphery of the primary mirror is directed out of the laser cavity in a ring shaped beam surrounding the feedback mirror. The unstable resonator produces high optical quality beam, which may extract energy out of the entire gain volume. Furthermore, in view of the fact that the number of times the laser beam passes the laser cavity is small, the use of optically unstable resonators requires a specific care to be taken of the gain in the laser medium.

It is generally known that, in prior art gas lasers having an unstable resonator, the gain may be enhanced by the increase of the gas pressure. However, usage of high pressure in pulsed lasers normally decreases the pulse repetition frequency since the gas needs a relatively long time in order to recover. Hence, conventional pulsed lasers having an unstable resonator cannot operate with high pressure and, therefore, pulses provided thereby are normally of relatively small averaged power, which inevitably limits their applications.

It is also generally known that a hybrid unstable resonator is applied in laser cavities with large Fresnel number. Such resonators are generally used with asymmetrical gain medium lasers such as CO₂ RF excited slab lasers. For the same reasons indicated above regarding unstable resonators, it is not efficient to increase the power of lasers which utilize hybrid resonators by increasing the gas pressure. Therefore, the main advantage of the hybrid unstable resonator is to operate in relatively low gain lasers with high efficiency.

The hybrid unstable resonator yields a laser beam which is diffraction limited on one axis and with multi mode degraded quality on the other axis. However, the effective beam quality is better than the stable resonator laser beam quality.

### SUMMARY OF THE INVENTION

Embodiments of the present invention provide a method for providing a laser beam and a laser arrangement as defined in claims 9 and 1, respectively.

In some embodiments of the present invention, the laser arrangement includes a DC voltage supplier to apply pulsed DC electric discharge on the DC electrodes. The DC voltage supplier includes a DC source, a pulse shaper to shape into pulses a DC signal provided by the DC source, a high voltage transformer to provide a high output voltage for exciting the discharge medium and/or an output smoother. The transformer may have a transformation ratio of about 1:40.

In some embodiments of the present invention, the output mirror and feedback mirror may constitute a co-focal negative branch unstable resonator in the axis in which the hybrid resonator is unstable. The output mirror may include a mask to determine the lateral cross section of the output beam. The output mirror and feedback mirror may reflect mainly a desired radiation wavelength and transmit other wavelengths.

In some embodiments of the present invention, the laser arrangement includes an RF voltage supplier, the RF voltage supplier may include a RF source to apply RF pulses on said RF electrodes.

The method according to embodiments of the present invention includes DC and RF discharges provided by the DC and/or RF voltage suppliers provided according to embodiments of the present invention.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1 is a schematic block illustration of a laser system according to embodiments of the present invention;
Fig.2 is a schematic illustration of laser arrangement according to embodiments of the present invention;
Fig.3 is a schematic block illustration of a medical treatment system according to an exemplary embodiment of the present invention;
Fig. 4 is a schematic illustration of a pulsed DC high power voltage supply for a laser arrangement according to embodiments of the present invention; and
Fig. 5 is a schematic illustration of a RF generator for a laser arrangement according to embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The possibility to increase the output power of a cylindrical DC and/or RF excited CO₂ laser by the design of its geometry is usually limited, in some cases due to its output power scaling. In particular, the output power of such a laser may be increased only by increasing the length of the laser cavity and it cannot be increased by increasing the inner diameter thereof due to temperature limitations and/or, in some cases, because of thermal instability, which may deteriorate the laser beam quality and its pointing stability.

Embodiments of the present invention provide a laser arrangement and system, which may provide sufficiently high power laser beam with good optical quality, wherein the laser beam is provided in sufficiently short pulses duration, for example which is suitable to medical applications. Some embodiments of the present invention relate to medical applications of laser, such as, especially, laser ablation treatment in teeth. For some treatments, for example treatments in teeth enamel, it is more suitable to use a secondary absorption wavelength of the gain material, which may provide lower energy relative to the main absorption wavelength. For example, whilst an absorption wavelength of 10.6µm is usually used in CO₂ laser treatments in soft tissues such as, for example, gums, a secondary absorption wavelength of 9.6µm may be used, according to embodiments of the present invention, in CO₂ laser treatments in tooth enamel in more efficient and/or less damaging manner.

The 9.6µm absorption line may be utilized by picking suitable mirror coatings for the laser resonator mirrors, which may provide enhanced feedback in the desired wavelength. Since the absorption wavelength of 9.6µm may provide less energy per pulse relative to the 10.6µm absorption line, in order to overcome this weakness, the laser arrangement and system according to embodiments of the present invention may enable higher energy per pulse, without reducing in a substantial manner the optical quality of the laser beam and without extending in a substantial manner the duration of each of the laser treatment pulses.

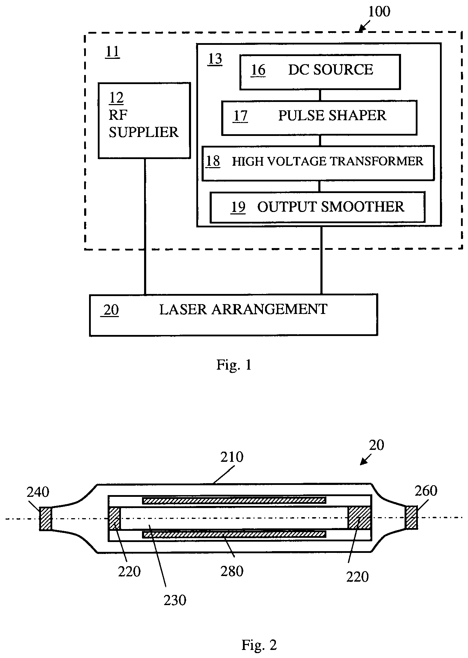

Reference is now made to Fig. 1, which is a schematic block illustration of a laser system 100 according to embodiments of the present invention. Laser system 100 includes a laser arrangement 20, a RF supplier 12 and a DC supplier 13. RF supplier 12 and DC supplier 13 may be included in the same power supply unit 11, or may be each in separate unit. DC Supplier 13 includes a DC source 16, a pulse shaper 17, a high voltage transformer 18 and an output smoother 19. Laser arrangement 20 includes a tube, an elongated discharge region, resonator mirrors, DC electrodes and RF electrodes, as shown in more detail in Fig. 2. The discharge region includes an active gaseous medium which may include, for example, carbon dioxide (CO₂) or another suitable medium.

RF supplier 12 and DC supplier 13 are used to excite the gaseous medium by applying alternating and pulsed DC electric discharge, respectively. The pulsed DC electric discharge are applied by DC supplier 13 on DC electrodes disposed at opposite ends of the elongated discharge region, for applying longitudinal discharge on the discharge region. The alternating discharge is applied by RF supplier 12 on RF electrodes disposed one against another along the elongated sides of the discharge region, for applying transverse RF discharge across the discharge region. An object of laser system 100, according to embodiments of the present invention is to provide relatively large amount of energy per laser pulse without damaging the optical quality of the laser beam, e.g. without increasing the beam diameter. High power pulsed DC exited CO₂ lasers may be considerably thermally unstable, which may damage the laser beam quality. The thermal instability may occur due to concentration of the plasma discharge to a small portion of the discharge region volume, which may result in acoustic oscillations and produce high temperature electrons which may decompose the CO₂ molecules, which may deteriorate the laser beam quality and its pointing stability. These phenomena usually limit the manufacturing of powerful DC excited lasers to lasers having compact sizes. However, embodiments of the present invention include transverse RF discharge orthogonal to the DC discharge and, for example, in the radial direction of the laser tube, wherein the DC discharge is applied longitudinally on the discharge region. The transverse RF discharge improves the uniformity of the excitation of the gas medium across the discharge region, thus improving the thermal stability of the laser. On the other hand, since RF power is more expensive, the reduction of consumed RF power by dividing the power consumption between RF power and DC power reduces the price of the laser and its operation.

By using the combination of RF discharge and DC discharge according to embodiments of the present invention, the laser operating efficiency is increased, with a significant lowering of required excitation voltages, and a substantial reduction in excitation hardware. Moreover, the combined use of the DC and RF provides high density of the electric energy. In some embodiments, the density of the electric field that is obtained by the combined use of the DC and RF discharges reaches 20 W/cm³. Such a high density of the electric energy provides for an increased gain in the discharge region at medium pressures of the laser gas. The increased gain that is provided in relatively low pressures enables the use of an optically unstable resonator in laser arrangement 20, without compromise on the output beam power and without decreasing the pulse repetition in an essential manner. The pulses enabled by the laser arrangement according to embodiments of the present invention, may be in a rather broad range of duration of 0.05-1msec. In order to provide a laser beam with good optical quality, it is necessary to use a hybrid resonator.

In DC supplier 13, pulse shaper 17 shapes the DC signal provided by DC source 16 into pulses. High voltage transformer 18 is used for changing the voltage to the high voltage value required for the laser. In some cases, the resulting output voltage pulses are too sharp, so that the amount of electrical energy provided per pulse may be too low. Therefore, output smoother 19 may be required in order to smooth the signals so that the voltage will not change so sharply. Output smoother 19 may include, for example, a capacitor connected in parallel and/or an inductor connected in series to transformer 18.

Reference is now made to Fig. 2, which is a schematic illustration of laser arrangement 20 according to embodiments of the present invention. Laser arrangement 20 includes a tube 210, RF electrodes 280, DC electrodes 220, an elongated discharge region 230, output mirror 240 and feedback mirror 260. Elongated discharge region 230 includes an active gaseous medium which may include, for example, carbon dioxide (CO₂) or another suitable medium to be excited in the discharge region so as to emit photons of induced radiation. In the present invention, the excitation is induced by a combination of DC and RF discharges by DC electrodes 220 and RF electrodes 280. DC electrodes 220, as discussed above, are disposed at opposite ends of elongated discharge region 230, for applying longitudinal pulsed DC discharge on the discharge region 230, for example, by DC supplier 13 shown in Fig. 1. RF electrodes 280, as discussed above, are disposed one against another along the elongated sides of discharge region 230, for applying transverse RF discharge across discharge region 230, for example by RF supplier 12 shown in Fig. 1.

Output mirror 240 and feedback mirror 260 constitute a hybrid resonator. Output mirror 240 and feedback mirror 260 are disposed at opposite ends of tube 210, in order to form an outlet beam of the radiation induced by the DC and RF discharges. Output mirror 240 is positioned at an output end of tube 210, i.e. from which the output radiation is to come out. Feedback mirror 260 is positioned at another end, e.g. the back end, of tube 210. Output mirror 240 is designed to enable transmission of the output beam. For example, output mirror 240 may include a mask which may determine the lateral cross section of the beam. Additionally, output mirror 240 may reflect into the tube mainly the desired gain wavelength, for example the 9.6µm absorption wavelength, as discussed in detail above. Output mirror 240 may enable transmission of other, for example, unutilized, wavelengths. Additionally, output mirror 240 has in its internal side, i.e. the side facing inward the tube, an optical power in one lateral axis, which is the axis in which the hybrid resonator is unstable. Feedback mirror 260 may substantially totally reflect the desired gain wavelength, e.g. the 9.6µm wavelength. Feedback mirror 260 may enable transmission of other, for example, unutilized, wavelengths. Feedback mirror 260 has different optical powers in two orthogonal lateral axes. Feedback mirror 260 has a relatively large radius of curvature, i.e. small optical power, in the axis in which the hybrid resonator is stable. Feedback mirror 260 has a relatively small radius of curvature, i.e. high optical power, in the axis in which the hybrid resonator is unstable, for example in which mirrors 240 and 260 may constitute a co-focal negative branch unstable resonator.

The ratio between the radii of feedback mirror 260 and output mirror 240 along the axis in which the hybrid resonator is unstable determines the magnification of the resonator and thus the laser output coupling. The use of a hybrid resonator enables a high laser beam optical quality, provided by a large diameter laser tube relative to usual medical-purpose lasers. The larger diameter laser tube enables higher laser beam power.

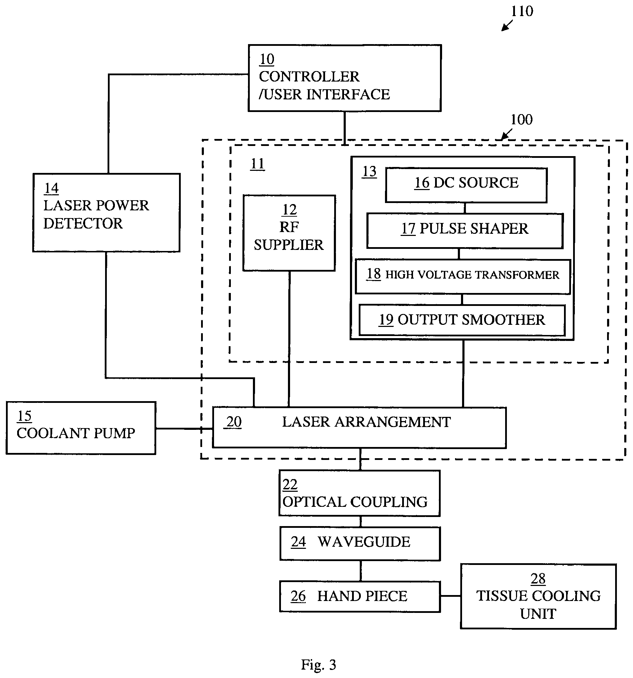

According to some embodiments of the present invention, laser system 100 may be included in a medical treatment system. Fig. 3 is a schematic block illustration of a medical treatment system 110 according to an exemplary embodiment of the present invention. Medical treatment system 110 may include laser system 100, which may include similar components as described with reference to Fig. 1. System 110 may include a controller and/or user interface 10, which may control the operation of laser system 100. System 110 may include a laser power detector 14, which may detect the laser power at the output of laser arrangement 20. Laser power detector 14 may report the detected output power to controller 10, which may control laser system 100 accordingly. System 110 may further include a coolant pump 15, an optical coupling 22, a waveguide 24, a hand piece 26 and a tissue cooling unit 28. Coolant pump 15 may prevent over-heating of laser arrangement 20. Optical coupling 22 and waveguide 24 may adapt the laser beam and guide it to hand piece 26, which may be used for providing a laser treatment by a professional or other user. Tissue cooling unit 28 may be used for cooling the tissue after and/or during the treatment, for example by water spray.

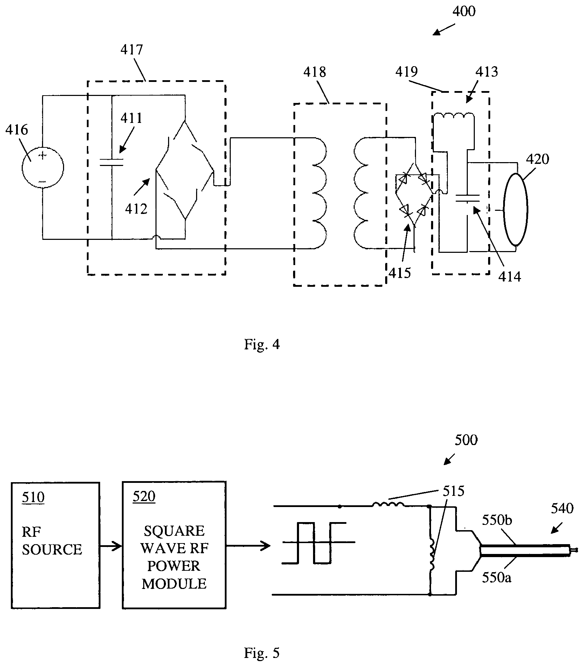

As mentioned above, without the transverse RF discharge the gaseous medium may become considerably thermally unstable when excited by pulsed high power DC voltage supply, to an extent which may deteriorate the laser beam quality. For this reason, usually a current source is used, which may be much more expensive and much less efficient in the required power levels, relative to a voltage source. The use of transverse RF discharge according to embodiments of the present invention has stabilizing effect on the laser, which may enable implementation of a DC pulsed high power voltage supply. Reference is now made to Fig. 4, which is a schematic illustration of a pulsed DC high power voltage supply 400 for a laser arrangement according to embodiments of the present invention. The high output voltage is provided to a laser arrangement 420 by inductance, which may result in optimal power transfer into the discharge region in laser 420. Other passive manners of voltage transfer may be used. Voltage supply 400 may include a DC voltage source 416, a pulse shaper 417, a high voltage transformer 418, a rectifier 415 and an output smoother 419.

Pulse shaper 417 may shape the DC signal provided by DC source 416 into pulses. Pulse shaper 417 may include, for example, an inverter 412 connected in parallel to a capacitor 411. Capacitor 411 may store the energy for each pulse. Inverter 412, which may include a four-switch bridge, an H-bridge a FET bridge and/or any other suitable component, may change alternately the direction in which the voltage is applied, so that the resulting pulse may have, for example, with an appropriate capacitor time constant and corresponding timing of the inverter, a substantially triangular wave form. High voltage transformer 418 may provide a high output voltage needed for exciting the discharge medium. In some embodiments, transformer 418 may have a transformation ratio of, for example, about 1:40, i.e. the output voltage may be about 40 times higher than the input voltage.

Rectifier 415 may convert the pulsed output voltage into a constant polarity pulsed voltage, for example by a diode bridge.

Output smoother 419 may smooth the resulting output voltage pulses, such that, for example, the voltage will not change too sharply in each pulse, which may cause the amount of electrical energy provided per pulse to be insufficient. Output smoother 419 may include, for example, a capacitor 414 connected in parallel and/or an inductor 413 connected in series to transformer 418.

Reference is now made to Fig. 5, which is a schematic illustration of a RF generator 500 for a laser arrangement according to embodiments of the present invention. RF generator 500 may include a RF source 510, a Square wave RF power module 520 and an inductor 515. RF source 510 may provide RF voltage as input to Square wave RF power module 520, which may shape the RF voltage into square pulses. Square wave RF power module 520 may include, for example, an inverter which may include, for example, a four-switch bridge, a push pull configuration and/or any other suitable component, may change alternately the direction in which the voltage is applied on inductor 515. Additionally, Square wave RF power module 520 may include a transformer, for example, in order to amplify the voltage. Inductor 515 may be connected in parallel or in series to RF electrodes 550a and 550b of a laser arrangement 540. Before the excitation of the active gaseous medium between electrodes 550a and 550b, electrodes 550a and 550b may constitute a capacitor, thus providing a parallel or series or parallel-series combination resonant response, for example together with inductor 515. In some embodiments, the voltage may be applied on electrodes 550a and 550b without the mediation of inductor 515. Before the excitation of the active gaseous medium the resonant response may have a high Q factor, because substantially no energy is being consumed between electrodes 550a and 550b. Therefore, a high RF voltage between electrodes 550a and 550b may be provided, which may facilitate the excitation and ionization of the active gaseous medium. When the gaseous medium becomes ionized, an ohmic resistance is formed between electrodes 550a and 550b which may consume the provided RF energy.

Accordingly, RF generator 500 enables RF excitation of the active gaseous medium by utilizing the capacitive nature of the laser before the excitation and the ohmic resistance formed between the laser plates when the gaseous medium becomes ionized, as operative factors of RF generator 500, which forces the operation of RF generator 500 to be matched with the laser operation. Therefore, substantially no matching network is required for the operation of RF voltage generator 500 and the laser system. This may enable fluent operation of the laser system and high rise time and short pulses. Additionally, substantially no calibrations and re-calibrations are needed as the operation of RF generator 500 is inherently calibrated with the laser system.

## Claims

1. A laser arrangement comprising:
an elongated tube (210);
an elongated discharge region (230) within said elongated tube including a discharge medium to be excited to induce laser radiation;
DC discharge electrodes (220) disposed at opposite ends of the elongated discharge region for applying longitudinal pulse DC discharge on the elongated discharge region;
RF electrodes (280) disposed at opposite elongated sides of the elongated discharge region for applying transverse RF discharge across the elongated discharge region; and
a hybrid stable and unstable laser resonator having an output mirror (240) disposed at an output end of said elongated tube (210) and a feedback mirror (260) disposed at a second end of said elongated tube,
said output mirror (240) having in its side facing said feedback mirror an optical power in a lateral axis in which the hybrid resonator is unstable,
said feedback mirror (260) disposed at a second end of said elongated tube (210) opposing said output mirror (240), said feedback mirror (260) having a smaller optical power in the axis in which the resonator is stable than the optical power in the axis in which the resonator is unstable, said stable and unstable axes being orthogonal lateral axes.

2. A laser arrangement according to claim 1, comprising a DC voltage supplier (13) to apply pulsed DC electric discharge on said DC electrodes (220).

3. A laser arrangement according to claim 2, wherein said DC voltage supplier (13) comprises a DC source (16, 416), a pulse shaper (17, 417) to shape into pulses a DC signal provided by the DC source, a high voltage transformer (18, 418) to provide a high output voltage for exciting the discharge medium and an output smoother (19, 419).

4. A laser arrangement according to claim 1, wherein the output mirror (240) and feedback mirror (260) constitute a co-focal negative branch unstable resonator in the axis in which the hybrid resonator is unstable.

5. A laser arrangement according to claim 1, wherein said output mirror (240) comprises a mask to determine the lateral cross section of the output beam.

6. A laser arrangement according to claim 1, wherein said output mirror (240) reflects mainly a desired radiation wavelength and transmit other wavelengths.

7. A laser arrangement according to claim 6, wherein said feedback mirror (260) reflects said desired radiation wavelength and transmit other wavelengths.

8. A laser arrangement according to claim 1, comprising an RF voltage supplier (12), the RF voltage supplier comprising a RF source (510) to apply RF pulses on said RF electrodes (280).

9. A method for providing a laser beam, the method comprising:
applying a longitudinal pulse DC discharge between DC discharge electrodes (220) disposed at opposite ends of an elongated discharge region (230), the elongated discharge region including a discharge medium to be excited to induce laser radiation and disposed within an elongated tube;
applying a RF discharge across the elongated discharge region transverse to said DC discharge, between RF electrodes (280) disposed at opposite elongated sides of the elongated discharge region,
wherein said elongated discharge region (230) comprises a hybrid stable and unstable laser resonator having an output mirror (240) disposed at an output end of an elongated tube (210) and a feedback mirror (260) disposed at a second end of the elongated tube,
said output mirror (240) having in its side facing said feedback mirror (260) an optical power in a lateral axis in which the hybrid resonator is unstable,
said feedback mirror (260) disposed at a second end of the elongated tube opposing said output mirror (240), said feedback mirror (260) having a smaller optical power in the axis in which the resonator is stable than the optical power in the axis in which the resonator is unstable, said stable and unstable axes being orthogonal lateral axes.

10. A method according to claim 9, wherein said DC discharge is applied by a DC voltage supplier (13) to apply pulsed DC electric discharge on said DC electrodes (220).

11. A method according to claim 9, wherein the output mirror and feedback mirror constitute a co-focal negative branch unstable resonator in the axis in which the hybrid resonator is unstable.

12. A method according to claim 9, wherein said output mirror comprises a mask to determine the lateral cross section of the output beam.

13. A method according to claim 9, wherein said output mirror reflects mainly a desired radiation wavelength and transmit other wavelengths.

14. A method according to claim 13, wherein said feedback mirror reflects said desired radiation wavelength and transmit other wavelengths.

15. A method according to claim 1 1, wherein said RF discharge is applied by a RF voltage supplier (12), the RF voltage supplier comprising a RF source (510) and an inductor (515) connected to said RF electrodes to apply RF pulses on said RF electrodes (280).

## Patentansprüche

1. Laseranordnung, Folgendes umfassend:
einen verlängerten Schlauch (210);
einen verlängerten Entladungsbereich (230) innerhalb des verlängerten Schlauchs, einschließlich eines Entladungsmediums, das austreten soll, um eine Laserstrahlung einzuleiten;
DC-Entladungselektroden (220), die an gegenüberliegenden Enden des verlängerten Entladungsbereichs zum Anlegen einer längsgepulsten DC-Entladung auf den verlängerten Entladungsbereich angeordnet sind;
HF-Elektroden (280), die an gegenüberliegenden verlängerten Seiten des verlängerten Entladungsbereichs zum Anlegen einer schräg verlaufenden HF-Entladung über dem verlängerten Entladungsbereichs angeordnet sind; und
einen stabilen und instabilen Hybridlaserresonator mit einem Ausgabespiegel (240), der an einem Ausgabeende des verlängerten Schlauchs (210) angeordnet ist, und mit einem Rückführungsspiegel (260), der an einem zweiten Ende des verlängerten Schlauchs angeordnet ist,
wobei der Ausgabespiegel (240) in seiner Seite, die dem Rückführungsspiegel zugewandt ist, eine optische Leistung in einer lateralen Achse aufweist, in der der Hybridresonator instabil ist,
wobei der Rückführungsspiegel (260), der an einem zweiten Ende des verlängerten Schlauchs (210) angeordnet ist, dem Ausgabespiegel (240) gegenüberliegt, wobei der Rückführungsspiegel (260) eine kleinere optische Leistung in der Achse, in der der Resonator stabil ist, als die optische Leistung in der Achse aufweist, in der der Resonator instabil ist, wobei die stabile und die instabile Achse orthogonale laterale Achsen sind.

2. Laseranordnung nach Anspruch 1, umfassend eine DC-Spannungszufuhr (13), um eine gepulste elektrische DC-Entladung auf die DC-Elektroden (220) anzulegen.

3. Laseranordnung nach Anspruch 2, wobei die DC-Spannungszufuhr (13) eine DC-Quelle (16, 416), eine Impulsformvorrichtung (17, 417), um ein DC-Signal, das durch die DC-Quelle bereitgestellt wird, in Impulse zu formen, einen Hochspannungstransformator (18, 418), um eine Hochspannungsausgabe zum Erregen des Entladungsmediums bereitzustellen, und ein Ausgabeglättungsglied (19, 419) umfasst.

4. Laseranordnung nach Anspruch 1, wobei der Ausgabespiegel (240) und der Rückführungsspiegel (260) einen konfokalen instabilen Resonator mit einem negativen Zweig in der Achse bilden, in der der Hybridresonator instabil ist.

5. Laseranordnung nach Anspruch 1, wobei der Ausgabespiegel (240) eine Maske umfasst, um den lateralen Querschnitt des Ausgabestrahls zu bestimmen.

6. Laseranordnung nach Anspruch 1, wobei der Ausgabespiegel (240) hauptsächlich eine gewünschte Strahlenwellenlänge reflektiert und andere Wellenlängen überträgt.

7. Laseranordnung nach Anspruch 6, wobei der Rückführungsspiegel (260) die gewünschte Strahlenwellenlänge reflektiert und andere Wellenlängen überträgt.

8. Laseranordnung nach Anspruch 1, umfassend eine HF-Spannungszufuhr (12), wobei die HF-Spannungszufuhr eine HF-Quelle (510) umfasst, um HF-Impulse auf die HF-Elektroden (280) anzulegen.

9. Verfahren zum Bereitstellen eines Laserstrahls, wobei das Verfahren Folgendes umfasst:
Anlegen einer längsgepulsten DC-Entladung zwischen DC-Entladungselektroden (220), die zwischen gegenüberliegenden Enden an einer verlängerten Entladungsregion (230) angeordnet sind, wobei der verlängerte Entladungsbereich ein zu erregendes Entladungsmedium beinhaltet, um eine Laserstrahlung einzuleiten, und das innerhalb eines verlängerten Schlauchs angeordnet ist;
Anlegen einer HF-Entladung über dem verlängerten Entladungsbereich quer zu der DC-Entladung zwischen HF-Elektroden (280), die an gegenüberliegenden Seiten des verlängerten Entladungsbereichs angeordnet sind,
wobei der verlängerte Entladungsbereich (230) einen stabilen und instabilen Hybridlaserresonator mit einem Ausgabespiegel (240), der an einem Ausgabeende eines verlängerten Schlauchs (210) angeordnet ist, und mit einem Rückführungsspiegel (260) umfasst, der an einem zweiten Ende des verlängerten Schlauchs angeordnet ist,
wobei der Ausgabespiegel (240) in seiner dem Rückführungsspiegel (260) zugewandten Seite eine optische Leistung in einer lateralen Achse aufweist, in der der Hybridresonator instabil ist,
wobei der Rückführungsspiegel (260), der an einem zweiten Ende des verlängerten Schlauchs angeordnet ist, dem Ausgabespiegel (240) gegenüberliegt, wobei der Rückführungsspiegel (260) eine kleinere optische Leistung in der Achse, in der der Resonator stabil ist, als die optische Leistung in der Achse aufweist, in der der Resonator instabil ist, wobei die stabile und die instabile Achse orthogonale laterale Achsen sind.

10. Verfahren nach Anspruch 9, wobei die DC-Entladung durch eine DC-Spannungszufuhr (13) angelegt wird, um eine gepulste elektrische DC-Entladung auf die DC-Elektroden (220) anzulegen.

11. Verfahren nach Anspruch 9, wobei der Ausgabespiegel und der Rückführungsspiegel einen konfokalen instabilen Resonator mit einem negativen Zweig in der Achse bilden, in der der Hybridresonator instabil ist.

12. Verfahren nach Anspruch 9, wobei der Ausgabespiegel eine Maske umfasst, um den lateralen Querschnitt des Ausgabestrahls zu bestimmen.

13. Verfahren nach Anspruch 9, wobei der Ausgabespiegel hauptsächlich eine gewünschte Strahlenwellenlänge reflektiert und andere Wellenlängen überträgt.

14. Verfahren nach Anspruch 13, wobei der Rückführungsspiegel die gewünschte Strahlenwellenlänge reflektiert und die anderen Wellenlängen überträgt.

15. Verfahren nach Anspruch 11, wobei die HF-Entladung durch eine HF-Spannungszufuhr (12) angelegt wird, wobei die HF-Spannungszufuhr eine HF-Quelle (510) und einen Induktor (515) umfasst, der mit den HF-Elektroden verbunden ist, um HF-Impulse auf die HF-Elektroden (280) anzulegen.

## Revendications

1. Agencement laser, comprenant :
un tube allongé (210) ;
une région de décharge allongée (230) dans ledit tube allongé comprenant un fluide de décharge devant être excité pour induire un rayonnement laser ;
des électrodes de décharge à courant continu (220) disposées aux extrémités opposées de la zone de décharge allongée pour appliquer une décharge à courant continu d'impulsion longitudinale sur la zone de décharge allongée ;
des électrodes RF (280) disposées sur des côtés allongés opposés de la région de décharge allongée pour appliquer une décharge RF transversale à travers la région de décharge allongée ; et
un résonateur laser hybride stable et instable comportant un miroir de sortie (240) disposé à une extrémité de sortie dudit tube allongé (210) et un miroir de rétroaction (260) disposé à une seconde extrémité dudit tube allongé,
ledit miroir de sortie (240) présentant sur son côté orienté vers ledit miroir de rétroaction une puissance optique dans un axe latéral dans lequel le résonateur hybride est instable,
ledit miroir de rétroaction (260) disposé à une seconde extrémité dudit tube allongé (210) étant opposé audit miroir de sortie (240), ledit miroir de rétroaction (260) présentant une puissance optique inférieure dans l'axe dans lequel le résonateur est stable par rapport à la puissance optique dans l'axe dans lequel le résonateur est instable, lesdits axes stable et instable étant des axes latéraux orthogonaux.

2. Agencement laser selon la revendication 1, comprenant une source d'alimentation en tension à courant continu (13) destinée à l'application d'une décharge électrique à courant continu pulsée sur lesdites électrodes à courant continu (220).

3. Agencement laser selon la revendication 2, dans lequel ladite source d'alimentation en tension à courant continu (13) comprend une source à courant continu (16, 416), un formeur d'impulsions (17, 417) destiné à former en impulsions un signal à courant continu fourni par la source à courant continu, un transformateur haute tension (18, 418) destiné à fournir une tension de sortie élevée permettant d'exciter le fluide de décharge et un dispositif de lissage de sortie (19, 419).

4. Agencement laser selon la revendication 1, dans lequel le miroir de sortie (240) et le miroir de rétroaction (260) constituent un résonateur instable à branche négative cofocale dans l'axe dans lequel le résonateur hybride est instable.

5. Agencement laser selon la revendication 1, dans lequel ledit miroir de sortie (240) comprend un masque destiné à déterminer la section transversale latérale du faisceau de sortie.

6. Agencement laser selon la revendication 1, dans lequel ledit miroir de sortie (240) réfléchit principalement une longueur d'onde de rayonnement souhaitée et transmet d'autres longueurs d'onde.

7. Agencement laser selon la revendication 6, dans lequel ledit miroir de rétroaction (260) réfléchit ladite longueur d'onde de rayonnement souhaitée et transmet d'autres longueurs d'onde.

8. Agencement laser selon la revendication 1, comprenant une source d'alimentation en tension RF (12), la source d'alimentation en tension RF comprenant une source RF (510) destinée à appliquer des impulsions RF sur lesdites électrodes RF (280).

9. Procédé pour fournir un faisceau laser, le procédé consistant à :
appliquer une décharge à courant continu d'impulsion longitudinale entre les électrodes de décharge à courant continu (220) disposées aux extrémités opposées d'une région de décharge allongée (230), la région de décharge allongée comprenant un fluide de décharge devant être excité pour induire un rayonnement laser et disposé dans un tube allongé ;
appliquer une décharge RF à travers la région de décharge allongée transversalement à ladite décharge à courant continu, entre des électrodes RF (280) disposées sur des côtés allongés opposés de la région de décharge allongée,
dans lequel ladite région de décharge allongée (230) comprend un résonateur laser hybride stable et instable comportant un miroir de sortie (240) disposé à une extrémité de sortie d'un tube allongé (210) et un miroir de réaction (260) disposé à une seconde extrémité du tube allongé,
ledit miroir de sortie (240) présentant sur son côté orienté vers ledit miroir de rétroaction (260) une puissance optique dans un axe latéral dans lequel le résonateur hybride est instable,
ledit miroir de rétroaction (260) disposé à une seconde extrémité du tube allongé étant opposé audit miroir de sortie (240), ledit miroir de rétroaction (260) présentant une puissance optique inférieure dans l'axe dans lequel le résonateur est stable par rapport à la puissance optique dans l'axe dans lequel le résonateur est instable, lesdits axes stable et instable étant des axes latéraux orthogonaux.

10. Procédé selon la revendication 9, dans lequel ladite décharge à courant continu est appliquée par une source d'alimentation en tension à courant continu (13) pour appliquer une décharge électrique à courant continu pulsée sur lesdites électrodes à courant continu (220).

11. Procédé selon la revendication 9, dans lequel le miroir de sortie et le miroir de rétroaction constituent un résonateur instable à branche négative cofocale dans l'axe dans lequel le résonateur hybride est instable.

12. Procédé selon la revendication 9, dans lequel ledit miroir de sortie comprend un masque destiné à déterminer la section transversale latérale du faisceau de sortie.

13. Procédé selon la revendication 9, dans lequel ledit miroir de sortie réfléchit principalement une longueur d'onde de rayonnement souhaitée et transmet d'autres longueurs d'onde.

14. Procédé selon la revendication 13, dans lequel ledit miroir de rétroaction réfléchit ladite longueur d'onde de rayonnement souhaitée et transmet d'autres longueurs d'onde.

15. Procédé selon la revendication 11, dans lequel ladite décharge RF est appliquée par une source d'alimentation en tension RF (12), la source d'alimentation en tension RF comprenant une source RF (510) et un inducteur (515) connecté auxdites électrodes RF pour appliquer des impulsions RF sur lesdites électrodes RF (280).
